# EUROPEAN PATENT APPLICATION

(11) **EP 2 192 083 A1**
(43) Date of publication of application: **02.06.2010**
(21) Application number: 07742208.7
(22) Date of filing: 23.04.2007
(51) Int. Cl.: C01B 3/08, H01M 8/04, H01M 8/06

(54) **ENERGY SUPPLY SYSTEM**

(71) Applicant: Mitsubishi Heavy Industries, Ltd., Tokyo 108-8215 (JP)
(72) Inventor: MORI, Yasushi, Tokyo 108-8215 (JP); GENGO, Tadashi, Tokyo 108-8215 (JP); KOBAYASHI, Yoshinori, Tokyo 108-8215 (JP)
(74) Representative: Bongiovanni, Simone
(86) International application number: PCT/JP2007/058773
(87) International publication number: WO 2008/136087

(57) **Abstract**

An energy supplying system is provided with an energy generating section (4) that generates energy by being supplied with hydrogen by a reaction of water contained in exhaust gas from the energy generation unit (4) with magnesium hydride contained therein, a regenerating section (30) that generates magnesium hydride and second oxygen with magnesium hydroxide generated by the reaction of water and magnesium hydride in the hydrogen supplying section (2), and a oxygen supplying section (3) that supplies oxygen to the energy generation section (4) by being supplied with oxygen from the regenerating section (30).

## Description

### TECHNICAL FIELD

The present invention relates to an energy supplying system, and in particular, to an energy supplying system using hydrogen as fuel.

### BACKGROUND ART

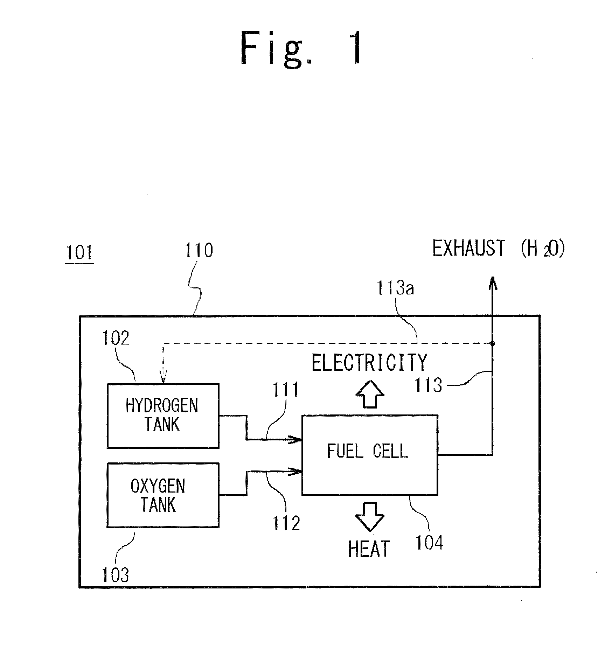

Known is an energy supplying system for generating energy (for example, electric power and heat) by utilizing hydrogen and supplying the energy. Fig. 1 is a schematic diagram showing one example of a conventional energy supplying system. The conventional energy supplying system 101 includes a fuel cell 104 as an energy generating device, a hydrogen tank 102, and an oxygen tank 103. To the fuel cell 104, hydrogen is supplied from the hydrogen tank 102 via a pipe 111 and oxygen is supplied from the oxygen tank 103 via a pipe 112, respectively. The fuel cell 104 generates electric power based on the hydrogen and the oxygen and generates heat. The fuel cell 104 emits exhaust (water vapor) via a pipe 113.

Now, from view points of environmental concern and efficient use of energy, it is desired for the energy supplying system 101 to suppress emissions as much as possible and to reuse reusable materials as much as possible. Especially, in a case of using the energy supplying system 101 in a closed space 110 such as facilities under the sea, under the ground, and in the universe and as vehicle, the desire is particularly strong. For example, when the hydrogen tank 102 produces hydrogen by reaction of metal with water, it can be considered to circulate the water vapor in the exhaust to the hydrogen tank 102 via a pipe 113a. As such art, Japanese Laid Open Patent Application (JP-P2003-317786A) discloses a fuel cell generating system. The fuel cell generating system includes: a fuel cell (2) which generates electricity by using hydrogen as fuel while producing water; a hydrogen producing device (4) which produces hydrogen by reaction of hydrogen-producing material (P) with water (W) and supplies the hydrogen to the fuel cell (2); and a water supplying device (7) which receives the water produced by the operation of the fuel cell (2) and supplies the water as water for the reaction to the hydrogen producing device (4).

The hydrogen producing device produces hydrogen by supplying water to the hydrogen-producing material (for example, particles of Magnesium alloy). It is described that a hydrogen-producing efficiency can be improved since the water from the fuel cell is hot; however, a control method for increasing and decreasing the production rate of hydrogen is not specifically described. Aqueous solution of Mg (OH) 2 produced along with the production of hydrogen is removed to outside, however, it is not specifically described how the aqueous solution is treated. In an enclosed space, a technique for suppressing the emissions as much as possible and deriving energy by a change of a substance in a physically-closed system is required.

Japanese Laid Open Patent Application (JP-P2002-208425A) discloses a fuel reformer for fuel cell as related art. The fuel reformer for fuel cell produces hydrogen from fuel and water vapor. The fuel reformer includes: a fuel reforming catalyst layer in which catalyst for steam reforming of the fuel is filled; to-be-reformed fuel gas supplying means for introducing to-be-reformed fuel gas including the fuel and the water vapor into the fuel reforming catalyst layer; reformed fuel gas emitting means for emitting gas mainly containing hydrogen produced by a steam reforming from the fuel reforming catalyst layer; and a metal oxide layer provided to a downstream of the fuel reforming catalyst layer in order to absorb carbon dioxide included in the reformed fuel. The metal oxide layer is, for example, a magnesium oxide layer. The magnesium oxide layer reacts with carbon dioxide produced along with hydrogen by a methanol reforming reaction and produces magnesium carbonate. That is, the carbon dioxide can be retrieved without being emitted to the atmosphere.

Japanese Laid Open Patent Application (JP-P2002-80202A) discloses a production system of fuel gas for fuel cell as related art. In the production system of fuel gas, metal hydride is divided into fine particles and supplied into a reactor, water is sprayed from a sprayer, and the metal hydride is hydrolyzed to produce hydrogen. Water produced in a fuel cell is used for the supplied water. In this manner, a water tank for the hydrolysis can be omitted or miniaturized and the whole of the system can be miniaturized. A configuration in which waste heat from the fuel cell is supplied to the reactor for thermal decomposition of the metal hydride and a configuration in which heat generated in the hydrolysis is used for hydrolysis of another metal hydride can be also employed. In the fuel cell system, heat of the cooling water for the fuel cell is used to produce hydrogen in some cases; however, the cooling water itself for the fuel cell is not used to produce hydrogen. The fuel cell system holds a product material after hydrogen is produced in the reactor and does not process special treatment to the product material.

### DISCLOSURE OF THE INVENTION

An object of the present invention is to provide an energy supplying system able to suppress emissions, and to reuse, or recycle emissions as much as possible when generating energy.

Another object of the present invention is to provide an energy supplying system able to suppress emissions as much as possible, and to derive energy by the change of substance in the physically-closed system in the case of generating energy in a closed space (or a limited space).

The above and other objects and advantages of the present invention can be easily understood from the following descriptions and the accompanying drawings.

To solve the above problem, an energy supplying system according to the present invention includes: a hydrogen supplying section, an energy generating section and a regenerating section. The hydrogen supplying section generates hydrogen and hydroxide by the reaction between a hydrogen generating substance and water. The energy generating section generates energy from hydrogen supplied from the hydrogen supplying section and oxygen supplied from the oxygen supplying section. The regenerating section generates the hydrogen-producing material and oxygen based on water and hydroxide exhausted from the hydrogen supplying section.

In the above-mentioned energy supplying system, the regenerating section may include a metal regenerating section for generating metal and water based on hydroxide and hydrogen and an electrolyzing section for electrolyzing water to generate hydrogen and oxygen.

In the above-mentioned energy supplying system, the electrolyzing section may include a natural energy generator in which electric power used in the electrolyzing section is generated.

In the above-mentioned energy supplying system, the metal regenerating section may include a chloride generating section in which chloride and water are generated by reaction of hydrogen chloride with hydroxide, and a metal regenerating section in which chlorine and metal are generated based on chloride.

In the above-mentioned energy supplying system, the metal regenerating section may include a hydrogen chloride generating section in which hydrogen chloride is generated based on hydrogen and chlorine.

In the above-mentioned energy supplying system, metal may include at least one material selected from a group consisting of Mg, Ni, Fe, V, Mn, Ti, Cu, Ag, Ca, Zn, Zr, Co, Cr, Al. The hydrogen-producing material may include at least one of the metal and a hydrogenated compound of the above-mentioned metal.

In the above-mentioned energy supplying system, a first unit having the hydrogen supplying section, the oxygen supplying section, the energy generating section and the storage section for storing the hydroxy compound generated at the hydrogen supplying section therein may be connected to a second unit having the regenerating section.

### BRIEF DESCRIPTION OF THE DRAWINGS

Fig. 1 is a schematic diagram showing one example of a conventional energy supplying system;
Fig. 2 is a block diagram showing a configuration of an energy supplying system according to a first embodiment of the present invention;
Fig. 3 is a block diagram showing a configuration of a magnesium regenerating section shown in Fig. 2.

### BEST MODE FOR CARRYING OUT THE INVENTION

Referring to attached drawings, energy supplying systems and hydrogen-producing materials according to embodiments of the present invention will be described below.

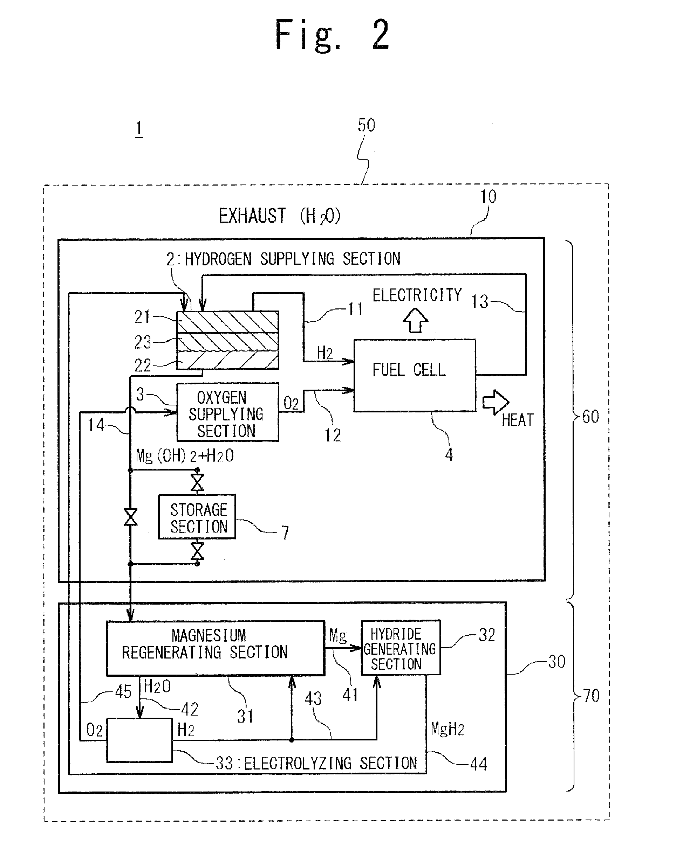

Fig. 2 is a block diagram showing the configuration of the energy supplying system according to the embodiments of the present invention. An energy supplying system 1 includes an energy supplying section 10 provided in a closed space 50 and a regenerating section 30.

The closed space 50 is equipment forming an approximately closed space as a whole such as facilities provided under the sea, under the ground, and in the universe, and as vehicles moving under the sea, under the ground, and in the universe. Due to limitation of fuel and a substance which can be brought into the closed space 50 and environmental consciousness, the energy supplying system 1 is required to suppress emissions and to recycle and reuse them as much as possible. According to the present invention, energy is generated by a reaction generating water from hydrogen and oxygen (ex. fuel cell, hydrogen gas engine). Simultaneously, a substance formed during generation of hydrogen is recycled and reused for generation of hydrogen. These reactions are as follows:

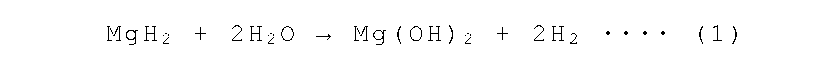

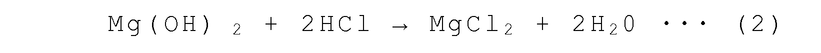

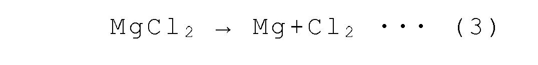

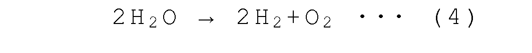

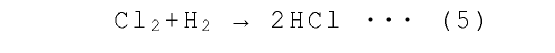

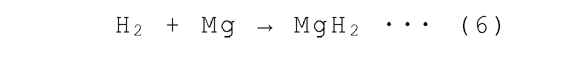

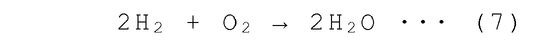

As represented by the formula (1), hydrogen and magnesium hydroxide is generated by the reaction of magnesium hydride with water. As represented by the formula (2), magnesium hydroxide reacts with hydrogen chloride generated as represented by the formula (5) to generate magnesium chloride and water. As represented by the formula (3), magnesium chloride is resolved into magnesium and chlorine by a method such as electrolysis. As represented by the formula (4), water is resolved into hydrogen and oxygen by a method such as electrolysis. As represented by the formula (5), hydrogen chloride is generated from the chlorine generated as represented by the formula (3) and hydrogen generated as represented by the formula (4). This hydrogen chloride is used in the reaction represented by the formula (2). As represented by the formula (6), magnesium hydride is generated from magnesium generated as represented by the formula (3) and hydrogen generated as represented by the formula (4). Magnesium hydride is used in the reaction represented by the formula (1). As represented by the formula (7), hydrogen generated as represented by the formula (1) and oxygen generated as represented by the formula (4) are used to generate energy (ex. fuel cell, hydrogen gas engine). Water generated at this time is used in the formula (1).

As described above, in the reactions represented by the formula (1) to the formula (7), the material balance between a source substance and a generated substance balance. In other words, by supplying energy such as electrolysis, energy can be extracted without substantially generating the emissions due to a change of a substance in a physically-closed system. A configuration for implementing the present invention will be described below.

The energy supplying section 10 generates energy by the reaction between hydrogen and oxygen. The energy supplying section 10 includes a hydrogen supplying section 2, an oxygen supplying section 3, a fuel cell 4 and a storage section 7.

The hydrogen supplying section 2 generates hydrogen (H₂) and magnesium hydroxide (Mg (OH)₂) 22 by the reaction between water (H₂O) 23 and magnesium hydride (MgH₂) 21 as represented by the formula (1). The water (H₂O) 23 is contained in exhaust from the fuel cell 4 and supplied through a pipe 13. The water (H₂O) 23 may be formed of liquid water, mixture of liquid water and steam, or only steam. The magnesium hydride (MgH₂) 21 is stored in the hydrogen supplying section 2 or supplied from the regenerating section 30. Generated hydrogen (H₂) is supplied to the fuel cell 4 through a pipe 11. The generated magnesium hydroxide (Mg(OH₂)) 22 is precipitated in the water 23 and a slurry formed by mixing the magnesium hydroxide and water is stored in the storage section 7 or supplied to the regenerating section 30 through a pipe 14.

The oxygen supplying section 3 supplies oxygen (O₂) to the fuel cell 4 through a pipe 12. Oxygen is stored in the oxygen supplying section 3 or supplied from the regenerating section 30.

The fuel cell 4 generates electric power and heat by a reaction represented by the formula (7) based on hydrogen (H₂) supplied from the hydrogen supplying section 2 and oxygen (O₂) supplied from the oxygen supplying section 3. At this time, water (steam) is generated as the emissions. According to the present invention, the type of the fuel cell 4 is not specifically limited and may be, for example, PEFC (Polymer Electrolyte Fuel Cell). Alternatively, the other facility for generating energy by using hydrogen may be adopted. An example is a hydrogen gas engine. Like the fuel cell 4, the hydrogen gas engine generates power (electric power in the case using an electric generator) and heat based on hydrogen and oxygen, and water (steam) is exhausted. Electric power (power) and heat are collected by a device not shown and used.

The regenerating section 30 generates the magnesium hydride 21 and oxygen based on magnesium hydroxide generated at the energy supply section 10. The regenerating section 30 includes a magnesium regenerating section (31), an electrolyzing section 33 and a hydride generating section 32.

The magnesium regenerating section 31 generates magnesium (Mg) and water based on magnesium hydroxide and hydrogen. Magnesium hydroxide is supplied from the hydrogen supplying section 2 or the storage section 7 of the energy supplying section 10. Hydrogen is supplied from the electrolyzing section 33. Generated magnesium is supplied to the hydride generating section 32 through a pipe 41. Generated water is supplied to the electrolyzing section 33 through a pipe 42.

The electrolyzing section 33 generates hydrogen and oxygen by electrolysis of water as represented by the formula (4). Here, water is supplied from the magnesium regenerating section 31 through the pipe 42. Electric power is exemplified by natural energy generators such as a solar cell, a wind generator, a wave-power generator and a geothermal power generator. As long as such devices exist in predetermined environment, it is assumed that electric power can be inexhaustibly supplied. Since introduced fuel and substance are limited and consideration for environment is needed in the closed space 50, such electric power is preferable. Here, when the closed space 50 exists in cosmic space, for example, the solar cell can be used. If the closed space 50 exists on the sea, for example, the solar cell, the wind generator and the wave-power generator can be used. If the closed space 50 exists under the ground, for example, the geothermal power generator can be used. Generated hydrogen is supplied to the magnesium regenerating section 31 and the hydride generating section 32 through a pipe 43. Generated oxygen is supplied to the oxygen supplying section 3 through a pipe 45.

It is preferred that electric power generated by the above-mentioned natural energy generator is used as electric power otherwise used in this energy supplying system.

The hydride generating section 32 generates magnesium hydride by the reaction between hydrogen and magnesium under a predetermined temperature and pressure as represented by the formula (6). Electric power exemplified at the electrolyzing section 33 can be used as energy for generating the temperature and pressure. Here, hydrogen is supplied from the electrolyzing section 33 through the 43. Magnesium is supplied from the magnesium regenerating section 31 through the pipe 41. Generated magnesium hydride is supplied to the hydrogen supplying section 2 of the energy supplying section 10 through the pipe 44.

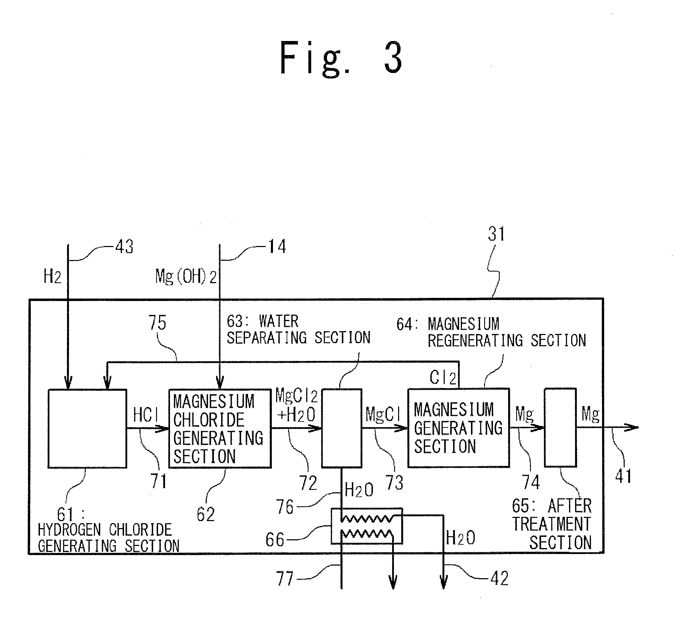

Next, the magnesium regenerating section 31 will be described in detail. Fig. 3 is a block diagram showing a configuration of the magnesium regenerating section shown in Fig. 2. The magnesium regenerating section 31 includes a hydrogen chloride generating section 61, a magnesium chloride generating section 62, a water dividing section 63, a magnesium generating section 64, an after treatment section 65 and a heat exchanger 66.

The hydrogen chloride generating section 61 generates hydrogen chloride by the reaction (burning) between hydrogen and chlorine as shown by the formula (5). Hydrogen is supplied from the electrolyzing section 33 through the pipe 43. Chlorine is supplied from the magnesium generating section 64 through a pipe 75. Generated hydrogen chloride is supplied to the magnesium chloride generating section 62 through a pipe 71.

The magnesium chloride generating section 62 generates magnesium chloride and water by the reaction between hydrogen chloride and magnesium hydroxide as represented by the formula (2). Hydrogen chloride is supplied from the hydrogen chloride generating section 61 through the pipe 71. Magnesium hydroxide is supplied from the energy supplying section 10 through the pipe 14. Generated magnesium chloride and water are supplied to the water dividing section 63.

The water dividing section 63 divides a mixture of magnesium chloride and water into magnesium chloride and water. For example, by boiling the mixture to evaporate water as steam, water can be removed. Removed steam (water) is sent to the heat exchanger 66 through a pipe 76. Then, the steam is cooled by heat exchange with a coolant (ex. sea water) in the heat exchanger 66 through a pipe 77, becomes water and is supplied to the electrolyzing section 33 through the pipe 42. Divided magnesium chloride is supplied to the magnesium generating section 64 through a pipe 73.

As represented by the formula (3), the magnesium generating section 64 electrolyzes magnesium chloride in an aqueous solution to generate chlorine and magnesium. Electric power exemplified at the electrolyzing section 33 can be used as electric power. Magnesium chloride is supplied from the water dividing section 63 through the pipe 73. Generated chlorine is supplied to the hydrogen chloride generating section 61 through a pipe 75. Generated magnesium is extracted from an electrode of electrolysis and sent to the after treatment section 65 through a pipe 74.

The after treatment section 65 dries and crushes magnesium so as to be easily hydrogenated. Magnesium is supplied from the magnesium generating section 64 through the pipe 74. Treated magnesium is supplied to the hydride generating section 32 through the pipe 41.

Here, all elements of the energy supplying system 1 are not necessarily provided in the same closed space 50. For example, the energy supplying section 10 may be mounted in a small survey ship 60 (child ship) and the regenerating section 30 may be mounted in a mother ship 70 supporting the small survey ship 60. In this case, when the small survey ship 60 is accommodated in the mother ship 70, the regenerating section 30 in the mother ship 70 generates magnesium hydride and oxygen and supplies magnesium hydride and oxygen to the hydrogen supplying section 2 and the oxygen supplying section 3, respectively, of the energy supplying section 10 in the small survey ship 60. Then, when survey is started, the energy supplying section 10 is detached from the regenerating section 30. In this case, magnesium hydroxide generated at the hydrogen supplying section 2 is stored in the storage section 7. Thus, the small survey ship 60 having no excessive space does not need to mount the regenerating section 30 therein, and by mounting the regenerating section 30 in the mother ship 70 having an excessive space, a substance can be recycled and reused. Examples of the small survey ship 60 include a submarine for undersea exploration and a space shuttle. Examples of the mother ship include a support ship for submarine for undersea exploration and a space station.

Next, an operation of the embodiment of the energy supplying system according to the present invention will be described.

The hydrogen supplying section 2 receives water 23 from a water storage device not shown at activation of the energy supplying system 1 and from the pipe 13 after activation. Then, hydrogen and magnesium hydroxide 22 are generated by the reaction between the water 23 and the magnesium hydride 21 (formula (1)). The hydrogen supplying section 2 supplies hydrogen to the fuel cell 4 through the pipe 11 and supplies slurry obtained by mixing the magnesium hydroxide 22 and the water 23 to the magnesium chloride generating section 62 through the pipe 14. The oxygen supplying section 3 supplies oxygen to the fuel cell 4 through the pipe 12. The fuel cell 4 generates electric power and heat by a reaction between hydrogen supplied from the hydrogen supplying section 2 and oxygen supplied from the oxygen supplying section 3 (formula (7)). Then, generated water (steam) is supplied to the hydrogen supplying section 2 through the pipe 13.

The hydrogen chloride generating section 61 receives hydrogen from the electrolyzing section 33 and chlorine from the magnesium generating section 64. Then, hydrogen chloride is generated by the reaction between hydrogen and chlorine (formula (5)). The magnesium chloride generating section 62 generates magnesium chloride and water by the reaction between hydrogen chloride supplied from the hydrogen chloride generating section 61 and magnesium hydroxide supplied from the hydrogen supplying section 2 (formula (2)). The water dividing section 63 divides a mixture of magnesium chloride and water supplied from the magnesium chloride generating section 62 into magnesium chloride and water. The magnesium generating section 64 electrolyzes magnesium chloride supplied from the water dividing section 63 in an aqueous solution (formula (3)) to generate chlorine and magnesium. The after treatment section 65 dries and crushes magnesium supplied from the magnesium generating section 64 so as to be easily hydrogenated.

The electrolyzing section 33 electrolyzes water supplied from the water dividing section 63 (heat exchanger 66) (formula (4)) to generate hydrogen and oxygen. Oxygen generated at the electrolyzing section 33 is supplied to the oxygen supplying section 3. The hydride generating section 32 generates magnesium hydride by the reaction between hydrogen supplied from the electrolyzing section 33 and magnesium supplied from the after treatment section 65 (formula (6)). Magnesium hydride generated at the hydride generating section 32 is supplied to the hydrogen supplying section 2.

As described above, according to the present invention, since a source substance and a generated substance in the reactions represented by the formula (1) to the formula (7) balance, by partially supplying energy such as electrolysis, energy can be extracted without substantially generating the emissions due to the change of the substance in the physically-closed system.

Mg electrolysis methods such as a Dow method (US, Dow Chemical Co.), an IG method (Germany, IG Farbenindustrie AG.) and a new electrolysis method can be used as the other operation of the hydride regenerating section 30.

In the above-mentioned embodiment, metal Mg is used as an especially preferable example. However, any metal containing at least one of Mg, Ni, Fe, V, Mn, Ti, Cu, Ag, Ca, Zn, Zr, Co, Cr, Al other than Mg can implement the present invention. In this case, the hydrogen-producing material for generating hydrogen at the hydrogen supplying section 2 only needs to contain at least one of the metal and a metal hydride compound.

It is obvious that the present invention is not limited to the embodiments as described above and that the above-described embodiments can be modified or changed within a scope of technical concept of the present invention.

According to the present invention, emissions can be suppressed and efficiency can be improved in an energy supplying system used in a closed space. Furthermore, emissions can be suppressed as much as possible and energy can be derived by the change of substance in the physically-closed system in the energy supplying system used in the enclosed space

## Claims

1. An energy supplying system comprising:
a hydrogen supplying section in which hydrogen-producing material reacts with water to produce hydrogen and hydroxide;
an energy generating section configured to generate energy by using said hydrogen supplied from said hydrogen supplying section and oxygen supplied from an oxygen supplying section; and
a regenerating section in which, based on said water and said hydroxide emitted from said hydrogen supplying section, said hydrogen-producing material and said oxygen are produced.

2. The energy supplying system according to claim 1, wherein said regenerating section includes:
a metal regenerating section configured to generate metal and said water based on said hydroxide and said hydrogen,
an electrolyzing section configured to generate said hydrogen and said oxygen by electrolysis of said water.

3. The energy supplying system according to claim 2, wherein said electrolyzing section includes a natural energy generator configured to generate electricity which is used in said electrolyzing section.

4. The energy supplying system according to any one of claims 2 and 3, wherein said metal regenerating section includes:
a chloride generating section configured to generate chloride and water by reaction between hydrogen chloride and said hydroxide; and
a metal regenerating section configured to generate chlorine and said metal based on said chloride.

5. The energy supplying system according to claim 4, wherein said metal regenerating section includes a hydrogen chloride producing section configured to generate said hydrogen chloride based on said hydrogen and said chlorine.

6. The energy supplying system according to any one of claims 1 to 5, wherein
said metal include at least one material selected from a group consisting of Mg, Ni, Fe, V, Mn, Ti, Cu, Ag, Ca, Zn, Zr, Co, Cr, Al, and
said hydrogen-producing material include at least one of the said metal and hydrogenated compound of said metal.

7. The energy supplying system according to any one of claims 1 to 6, wherein
said hydrogen supplying section and
first unit having the hydrogen supplying section, the oxygen supplying section, the energy generating section and the storage section for storing the hydroxy compound generated at the hydrogen supplying section therein may be connected to a second unit having the regenerating section.
